# EUROPÄISCHE PATENTSCHRIFT

(11) **EP 1 260 192 B1**
(45) Veröffentlichungstag und Bekanntmachung des Hinweises auf die Patenterteilung: **27.11.2013**
(21) Anmeldenummer: 02008012.3
(22) Anmeldetag: 10.04.2002
(51) Int. Cl.: A61C 13/15, A61C 19/00

(54) **Beleuchtungsvorrichtung**
Illumination device
Dispositif d'éclairage

(30) Priorität: 23.05.2001 DE 10125343
(43) Veröffentlichungstag der Anmeldung: 27.11.2002
(73) Patentinhaber: Ivoclar Vivadent AG, 9494 Schaan (LI)
(72) Erfinder: Burtscher, Peter, 6830 Rankweil (AT); Plank, Wolfgang, 6830 Rankweil (AT); Rohner, Gottfried, 9450 Altstätten (CH)
(74) Vertreter: Baronetzky, Klaus

(56) Entgegenhaltungen:
- EP-A- 0 780 103
- EP-A- 0 879 582
- EP-A- 0 998 880
- US-A- 5 420 768
- US-A- 5 634 711
- PATENT ABSTRACTS OF JAPAN vol. 1998, no. 11, 30. September 1998 (1998-09-30) & JP 10 165419 A (OSADA RES INST LTD), 23. Juni 1998 (1998-06-23)

## Beschreibung

Die Erfindung betrifft eine Beleuchtungsvorrichtung gemäss dem Oberbegriff von Anspruch 1.

Beleuchtungsvorrichtung für Lichthärtgeräte im Dentalbereich sind heutzutage entweder als Handgeräte für die unmittelbare Lichtpolymerisation im Mund des Patienten oder als stationäre Geräte ausgebildet, wie es aus der US 5 420 768 A ersichtlich ist, bei der mehrere LED's gleichzeitig einschaltbar sind worauf die zeitweilige Form des Anspruchs 1 basiert.

Gerade bei Handgeräten ist es wichtig, dass die Polymerisation rasch vorgenommen werden kann, allein schon, um in dem begrenzten zur Verfügung stehenden Zeitraum eine vollständige Durchpolymerisation auch grösserer Zahnfüllungen aus lichthärtbarem Kunststoff zu gewährleisten.

Überwiegend weisen die Beleuchtungsvorrichtungen eine Halogenglühlampe mit integriertem Reflektor auf, deren Strahlengang einem Lichtleiterstab zugeleitet wird, dessen Lichtaustritt unmittelbar auf die zu härtende Füllung gerichtet wird. Die üblichen lichthärtenden Dentalkunststoffe weisen eine spektrale Empfindlichkeit auf, deren Maximum im Bereich des sichtbaren Lichts liegt.

Andererseits senden handelsübliche Halogenglühlampen sichtbares Licht mit ganz geringen UV-Anteilen von z.B. 2% aus. Um die Wirksamkeit der Strahlungsbeaufschlagung zu verbessern, ist versucht worden, die spektrale Empfindlichkeit der zu polymerisierenden Kunststoffe in den langwelligeren Bereich zu verlagern. Dies gelingt jedoch nur in begrenztem Masse.

Ferner ist es vorgeschlagen worden, über für höherwelliges Licht durchlässige Filter den emittierten Spektralbereich zu höheren Frequenzen zu verlagern. Bei dieser Lösung muss jedoch zunächst recht viel Strahlungsenergie erzeugt werden, so dass der Wirkungsgrad entsprechend schlecht ist. Regelmässig muss zudem ein Kühlgebläse eingesetzt werden, das die Temperatur des Lichthärtgeräts begrenzt, aber einen für Zahnarzt und/oder Patienten unangenehmen Luftstrom erzeugt.

Ferner sind auch seit längerem Beleuchtungsvorrichtungen bekannt geworden, die mit Halbleiter-Strahlungsquellen wie LEDs arbeiten. Beispielsweise ist aus der DE-GM 295 11 927 ein Lichthärtgerät bekannt geworden, dass eine im blauen Spektralbereich emittierende Leuchtdiode verwendet, die von einer Batterie oder einem Akkumulator gespeist wird.

Ferner ist es auch bereits vorgeschlagen worden, mehrere LEDs für die Speisung des Lichtleiterstabs zu verwenden. Hierdurch lässt sich die Lichtabgabe des Lichthärtgeräts verbessern. Unabhängig davon, ob die LEDs als Modul, also in einem gemeinsamen Kunststoffgehäuse, oder als Einzel-LEDs, also jeweils in einem Kunststoffgehäuse angeordnet sind und strahlen, ist ihre Lichtabgabe begrenzt. Die Kunststoffumhüllung wirkt nicht nur elektrisch isolierend, sondern dämmt auch die Wärmeabgabe, so dass auch bei Kühlung des Kunststoffgehäuses von aussen eine bestimmte Leistungsdichte des je lichtaussendenden Chips nicht überschritten werden sollte.

Die JP-A-10165419 (Abstract) beschreibt eine dentale Beleuchtungsvorrichtung in Form eines Handgerätes, welches mit LED's, die Licht in den Grundfarben Rot, Grün und Blau (RGB) abstrahlen können, aufweist. Über Schalter können die LED's einzeln oder kombiniert eingeschaltet werden, um bspw. mit der Kombination aller drei Grundfarben weißes Licht zur Beleuchtung (generelle Untersuchung) des Mundraumes, ledigliches blaues Licht (zum Lichthärten) oder nur grünes Licht (zur Untersuchung von Karies) bereitzustellen.

Die EP 0879582 A3 beschreibt Bestrahlungsvorrichtung zum Polymerisieren dentaler Werkstoffe mit einer Vielzahl von LED's, die auf einem gemeinsamen Substrat angeordnet sind, deren Strahlen zu einem Bündel zusammengefasst werden und somit ein kleiner Leuchtfleck intensiver ausgeleuchtet können werden soll.

Die EP 0 998 880 A beschreibt ein Präparationsinstrument zum Aushärten von dentalen Kunststoffen, welches mehrfarbige LED's oder mehrere LED's mit je unterschiedlichen Lichtfarben vorsieht, welche sich individuell einschalten lassen. Damit soll zum einen Lichthärtung (bspw. mit einer blauen LED) und auch die Beleuchtung (mit weißem Licht) der Präparation mit ein und demselben Instrument möglich sein.

Die US 5 634 711 A beschreibt ein Lichthärtgerät, bei dem eine Matrixanordnung mehrerer LED-Lichtquellen gepulst betrieben wird, um eine höhere Lichtausbeute bei gleichzeitig weniger erzeugter Verlustwärme zu erreichen. Durch die Variation der Pulsweite soll eine Anpassung der abgegebenen Lichtmenge erreicht werden. In einer Ausführung ist die Matrixanordnung in zwei Untermatritzen unterteilt, welche je über einen eigenen gepulsten Ansteuerschaltkreis verfügen. Auf diese Weise soll eine gewisse Redundanz erreicht werden können.

Es sind zahlreiche Versuche unternommen worden, die Leuchtdichte der bekannten Beleuchtungsvorrichtungen zu verbessern, um eine vollständige Durchhärtung auch tiefliegender Schichten rasch zu erzielen. Bislang bekannte, übliche Beleuchtungsvorrichtungen mit einer Beleuchtungsstärke von beispielsweise 50 mW/cm² führen zwar bei entsprechend langer Lichtbeaufschlagung des zu polymerisierenden Kunststoffmaterials zu einer guten Oberflächenhärte. Tiefer liegende Schichten werden jedoch nicht oder nur unvollständig durchgehärtet. Es entsteht ein Härtegradient, der dazu führt, dass tieferliegende Bereiche noch eher weich verbleiben oder später durchhärten als Oberflächenbereiche.

Die bekannten Beleuchtungsvorrichtungen führen zu Restaurationsergebnissen, die teilweise mit Randspaltenproblemen behaftet sind. Die bekannten lichthärtenden Kunststoffe schrumpfen leicht während des Härtens. Mit den bekannten Beleuchtungsvorrichtungen entsteht die Durchhärtung zunächst im oberen/äußeren Bereich des Restaurats. Die nachfolgende Durchhärtung der tieferliegenden Bereiche führt zur Kontraktion und damit zur Randspaltenbildung.

Randspaltenprobleme entstehen insbesondere bei energiereichen Beleuchtungsvorrichtungen für Lichthärtgeräte. Andererseits ist eine hohe Energiedichte mit einer entsprechend raschen Durchhärtung höchst erwünscht, um eine rasche Behandlung zu ermöglichen, die sowohl die Unannehmlichkeiten für den Patienten reduziert als auch einen verbesserten Durchsatz in der Praxis des Zahnarztes ermöglicht.

Daher liegt der Erfindung die Aufgabe zugrunde, eine Beleuchtungsvorrichtung für Dentalzwecke gemäß dem Oberbegriff von Anspruch 1 zu schaffen, die die Neigung zur Randspaltenbildung lichthärtbarer Massen reduziert und dennoch kostengünstig herzustellen und flexibel einzusetzen ist.

Diese Aufgabe wird erfindungsgemäß durch Anspruch 1 gelöst. Vorteilhafte Weiterbildungen ergeben sich aus den Unteransprüchen.

Erfindungsgemäß besonders günstig ist es, dass durch die separate Ansteuerung von Lichtquellen für verschiedene Bereiche des Dentalmaterials die Beleuchtungsintensität und damit der Durchhärtungsgrad gezielt den Anforderungen anpassbar ist. Im Randbereich z.B. verläuft das Dentalrestaurationsmaterial typischerweise dünner als im Mittenbereich und bei den üblichen Lichthärtgeräten und Beleuchtungsvorrichtungen wird häufig der Randbereich ausgesprochen intensiv durchgehärtet, während der Mittenbereich mit seiner größeren Schichtstärke nur so weit durchgehärtet wird, dass minimalen Festigkeitserfordernissen Genüge getan wird.

Andererseits haben Untersuchungen ergeben, dass ein Weiterhärten eines bereits durchgehärteten licht- und/oder wärmepolymerisierbaren Kunststoffs nicht möglich ist und oft schlechtere Materialeigenschaften in Kauf genommen werden. Erfindungsgemäß wird dies kompensiert, indem durch die getrennte Ansteuerung der Lichtquellen für verschiedene Bereiche des lichthärtbaren Dentalmaterials die Durchhärtung an die Erfordernisse anpassbar ist. Besonders günstig in diesem Zusammenhang ist es, dass sich hierdurch die Möglichkeit eröffnet, der Randspaltenbildung vorzubeugen: Randspalten entstehen durch Kontraktion des verwendeten Kunststoffs während der Photopolymerisation. Mit der erfindungsgemäßen Beleuchtungsvorrichtung lassen sich Randspalten verhindern, indem die getrennte Ansteuerung der Lichtquellen für verschiedene Bereiche des Dentalmaterials dahingehend ausgenutzt wird, dass zunächst über die entsprechende Lichtquelle ein Bereich gehärtet und anschließend hieran ein anderer Bereich gehärtet wird.

Bevorzugt ist der eine Bereich der Mittenbereich und der andere Bereich der Randbereich. Bei dieser Ausgestaltung wird zunächst der Mittenbereich von den ersten Lichtquellen gehärtet, während der Randbereich noch weich ist, so dass keine Randspalten entstehen können.

Hierbei wird die Tatsache ausgenutzt, dass während des Durchhärtens eines Bereiches das dort auftretende Schrumpfen nicht dazu führt, dass sich Randspalten bilden. Zu diesem Zeitpunkt ist der Randbereich des Kunststoffs noch flüssig oder halbflüssig, so dass während des Durchhärtens keine Randspalten entstehen können.

Der Randbereich weist z.B. eine wesentlich geringere Masse und insbesondere eine geringere Breite auf. Die Längenverkürzung in Querrichtung ist daher deutlich, beispielsweise um eine Zehnerpotenz, geringer, so dass die Kontraktion innerhalb der Dehneigenschaften des Materials verbleibt. Hinzu kommt, dass bei den bislang üblichen Lichthärtgeräten die Durchhärtung aufgrund der dort geringeren Schichtstärke regelmäßig zuerst in den Randbereichen erfolgte. Die Randbereiche mussten daher bislang nicht nur die eigene Kontraktion, sondern auch diejenige der erheblich voluminöseren Mittenbereiche kompensieren, um Randspalten zu vermeiden, und dies, obwohl sie auch noch eine Weiterhärtung nach dem Durchhärten erfuhren, also ihre Neigung zur weiteren Verminderung ihrer Elastizität auch noch unterstützt wurde.

Erfindungsgemäß lässt sich nun die Durchhärtungsreihenfolge genau umkehren, was zu der erwünschten Randspaltenfreiheit führt.

Es ist möglich, verschiedene LED-Chips für die Lichtquellen miteinander zu kombinieren, um bestimmte Effekte zu erzielen. Die Chips können bei dieser Ausgestaltung auch einzeln angesteuert werden. Beispielsweise kann gezielt Rotlicht abgegeben werden, wenn in einer modifizierten Ausgestaltung der erfindungsgemäßen Beleuchtungsvorrichtung eine Wärmebehandlung durchgeführt werden soll. Durch die Einzelsteuerung lassen sich auch programmgesteuerte Beleuchtungseffekte erzielen, wenn beispielsweise mit unterschiedlichen Intensitäten für die Lichthärtung gearbeitet werden soll.

In einer besonders günstigen Ausgestaltung ist es vorgesehen, zunächst mittels grün emittierender LED-Chips eine Vorhärtung vorzunehmen, dann einen Überschuss an zu polymerisierendem Material zu entfernen und dann mit einer Wellenlänge von 420 Nanometern die Durchhärtung vorzunehmen.

Besonders günstig ist es, wenn die LED-Chips in ihrer Mehrfachanordnung hier unmittelbar benachbart der zu durchhärtenden Masse angeordnet werden können, um die Härtung vorzunehmen. Bei dieser Lösung entsteht erstmals die Möglichkeit, gezielt mit einer bestimmten LED-Lichtquelle einen bestimmten Bereich des Restaurationsteils zu beaufschlagen. Diese Lösung erlaubt es beispielsweise, zunächst den mittleren und regelmäßig tieferen Bereich des Restaurationsteils intensiver mit Licht zu beaufschlagen. Die Härtung erfolgt dann praktisch so, dass der zentrale Bereich durchhärtet. Ein Schrumpfen an dieser Stelle ist aber für die Randspaltenbildung unkritisch, nachdem zu diesem Zeitpunkt die Randbereiche nicht durchgehärtet sind. Dies stellt einen ganz besonderen Fortschritt gegenüber der bislang üblichen gleichmäßigen Härtung dar,
wobei die Randspaltenbildung drastisch reduziert oder gar ganz vermieden ist.

Weitere Einzelheiten, Vorteile und Merkmale ergeben sich aus der nachfolgenden Beschreibung mehrerer Ausführungsbeispiele anhand der Zeichnung.

### Es zeigen:

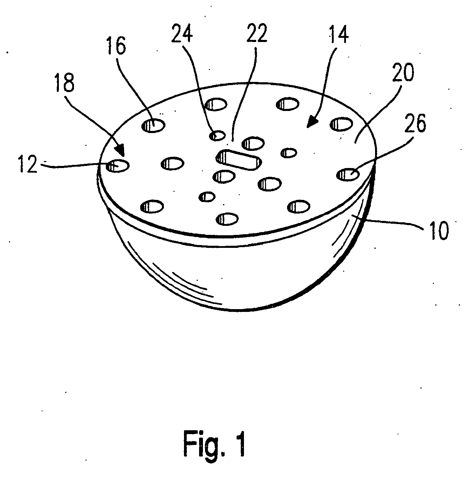

- Fig. 1: eine Ansicht eines Details einer erfindungsgemäßen Beleuchtungsvorrichtung, nämlich eines Basiskörpers mit integrierten Lichtquellen in perspektivischer Darstellung;
- Fig. 2: eine weitere Ausführungsform einer erfindungsgemäßen Beleuchtungsvorrichtung, unter Darstellung einer modifizierten Ausgestaltung der Lichtquellen; und
- Fig. 3: eine Darstellung einer dritten Ausführungsform einer erfindungsgemäßen Beleuchtungsvorrichtung.

Ein erfindungsgemäßes Lichthärtgerät weist einen Basiskörper 10 auf, der mit einer Mehrzahl von LED-Chips 12 an seiner Oberseite 14 bestückt ist. Die LED-Chips 12 sind je am Grunde von Mulden 16 befestigt und gegenüber der Oberfläche 18 versenkt. In dem dargestellten Ausführungsbeispiel sind 17 Chips 12 vorgesehen, die über die Oberseite 14 des Basiskörpers 10 so verteilt, dass sich Gruppen von Lichtquellen ergeben.

Die LED-Chips 12 sind so angeordnet, dass ein Teil sich im Randbereich 20 des Basiskörpers 10 und ein weiterer Teil im Mittenbereich 22 des Basiskörpers 10 befindet. Die Chips 12 im Mittenbereich 22 bilden erste Lichtquellen 24 und die Chips im Randbereich bilden zweite Lichtquellen 26. Die Chips im Mittenbereich sind deutlich leistungsstärker als die Chips im Randbereich 20.

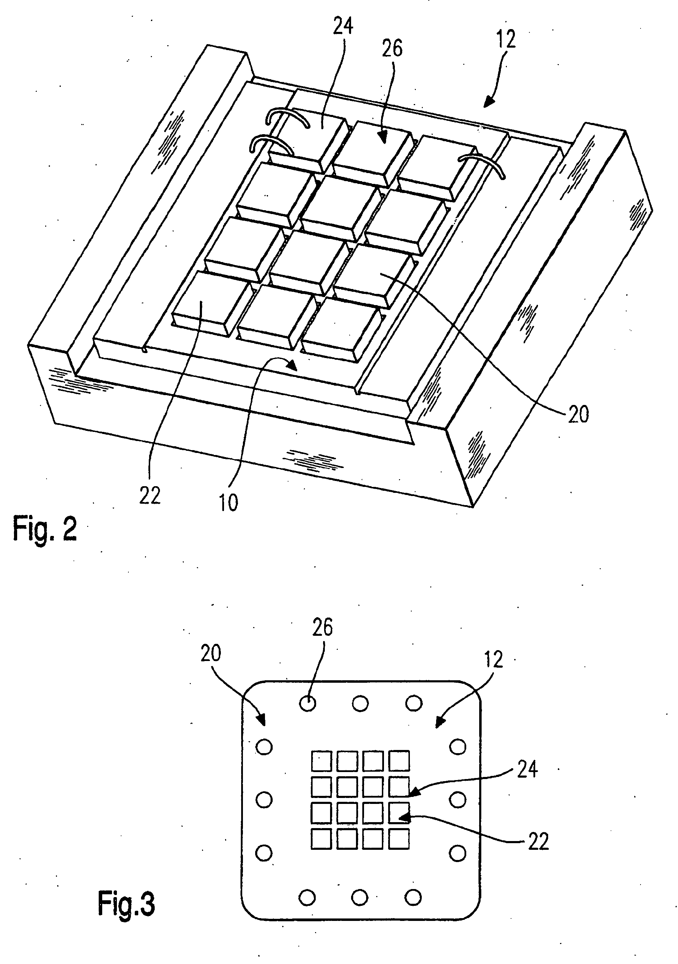

Eine weitere Ausführungsform einer erfindungsgemäßen Beleuchtungsvorrichtung ist aus Fig. 2 ersichtlich. Hier sind die Chips 12 enger benachbart montiert, wobei auch hier ein Randbereich 20 mit ersten Lichtquellen 24 und ein Mittenbereich 22 mit zweiten Lichtquellen 26 gebildet ist.

Aus Fig. 3 ist eine weitere modifizierte Ausführungsform ersichtlich. Hier sind insgesamt 16 Chips 12 zur Bildung der ersten Lichtquellen 24 im Mittenbereich 22 vorgesehen, während 12 Chips 12 zur Bildung der zweiten Lichtquellen 26 im Randbereich 20 vorgesehen sind.

Mit der erfindungsgemäßen Steuervorrichtung werden bei den dargestellten Ausführungsbeispielen zunächst die ersten Lichtquellen 24 eingeschaltet, wenn die erfindungsgemäße Beleuchtungsvorrichtung in unmittelbarer Nachbarschaft mit der Oberfläche des zu härtenden Dentalrestaurationsteils gebracht ist. Nach dem Durchhärten des Mittenbereichs werden die zweiten Lichtquellen 26 eingeschaltet, und so der Randbereich des Dentalrestaurationsteils durchgehärtet.

Es versteht sich, dass eine beliebige Verteilung der Lichtquellen im Rahmen der Erfindung möglich ist. So können im Mittenbereich 22 bevorzugt LEDs hoher Lichtleistung dicht angeordnet sein, während die Lichtquellen für den Randbereich 20 eine geringere Leistung und Dichte aufweisen können.

Die Lichtquellen können aus LEDs oder aus LED-Arrays bestehen, die Licht verschiedener Wellenlänge emittieren und getrennt oder gemeinsam ansteuerbar sind. Dadurch kann die zu bestrahlende Fläche gezielt angesteuert werden, und man erreicht dadurch eine gesteuerte Polymerisation des photopolymerisierbaren Dentalmaterials (von links nach rechts, teppichförmig von außen nach innen, von innen nach außen etc.). Diese gesteuerte Flächenbestrahlung kann man noch optimieren, indem man dem Dentalmaterial mindestens zwei verschiedene Photokatalysatoren zusetzt, die verschiedene Intensitätsmaxima besitzen. Durch zeitversetzte Ansteuerung der Lichtquellen härtet zunächst ein Teil des Dentalmaterials, dann der andere Teil aus.

Erfindungsgemäß besonders günstig ist die direkte Beaufschlagung des Dentalrestaurationsteils durch die Beleuchtungsvorrichtung, also ohne dazwischengeschalteten Lichtleiter.

## Patentansprüche

1. Beleuchtungsvorrichtung für Dentalzwecke, mit einer Mehrzahl von Lichtquellen auf Halbleiterbasis, die auf einem Substrat angebracht sind, wobei mit den Lichtquellen ein strahlungspolymerisierbares Dentairestaurationsmaterial beaufschlagbar ist, wobei mindestens eine erste Lichtquelle (24) und mindestens eine zweite Lichtquelle (26) derart gewählt und auf dem Substrat angeordnet sind, dass durch die erste und zweite Lichtquelle (24, 26) je verschiedene Bereiche des Dentalrestaurationsmaterials bestrahlbar sind, wobei eine Steuervorrichtung vorgesehen ist, mit welcher die beiden Lichtquellen (24, 26) für verschiedene Bereiche des Dentairestaurationsmaterials je getrennt ansteuerbar sind,
**dadurch gekennzeichnet, dass** mindestens zwei Lichtquellen (24, 26) im Winkel zueinander so ausgerichtet sind, dass sie das zu härtende Dentalrestaurationsteil von zwei unterschiedlichen Winkeln beaufschlagen.

2. Beleuchtungsvorrichtung nach Anspruch 1,
**dadurch gekennzeichnet, dass** die erste Lichtquelle (24) für die Beaufschlagung des Mittenbereichs des Dentalrestaurationsmaterials, in einem Mittenbereich (22) eines Basiskörpers (10) angeordnet ist, und die zweite Lichtquelle (26) für die Beaufschlagung des Randbereichs des Dentalrestaurationsmaterials in einem Randbereich (20) des Basiskörpers (10) angeordnet ist.

3. Beleuchtungsvorrichtung nach Anspruch 2,
**dadurch gekennzeichnet, dass** die erste Lichtquelle (24) im Mittenbereich (22) des Basiskörpers eine höhere Leistung aufweist als die im Randbereich (20) angeordnete zweite Lichtquelle (26).

4. Beleuchtungsvorrichtung nach Anspruch 1,
**dadurch gekennzeichnet, dass** mit der Steuervorrichtung die ersten Lichtquellen (24) während eines ersten Zeitabschnitts und die zweiten Lichtquellen (26) während eines zweiten Zeitabschnitts einschaltbar sind und dass die Zeitabschnitte einander nicht überlappen.

5. Beleuchtungsvorrichtung nach Anspruch 1,
**dadurch gekennzeichnet, dass** mit der Steuervorrichtung die ersten Lichtquellen (24) in einem ersten Zeitabschnitt und die zweiten Lichtquellen (26) in einem zweiten Zeitabschnitt einschaltbar sind, und dass die Zeitabschnitte einander überlappen.

6. Beleuchtungsvorrichtung nach einem der vorhergehenden Ansprüche,
**dadurch gekennzeichnet, dass** die Steuervorrichtung für die Ansteuerung der ersten und der zweiten Lichtquellen die zugeführte Leistung während eines Zeitabschnitts, währenddessen die ersten Lichtquellen (24) einen Bereich beleuchten und/oder währenddessen die zweiten Lichtquellen (26) einen anderen Bereich beleuchten, zunehmen lässt.

7. Beleuchtungsvorrichtung nach einem der vorhergehenden Ansprüche,
**dadurch gekennzeichnet, dass** die Lichtquellen in einer Matrix angeordnet sind und die äußeren Lichtquellen der Matrix einen anderen Bereich und die inneren Lichtquellen der Matrix einen Bereich des Dentalrestaurationsteils beaufschlagen.

8. Beleuchtungsvorrichtung nach einem der vorhergehenden Ansprüche,
**dadurch gekennzeichnet, dass** LED-Chips (12) nebeneinander und übereinander im Raster angeordnet sind und Drähte für die LED-Chips (12) als Lichtquellen (12) sich mindestens teilweise zwischen den Chips erstrecken, und dass die Drähte insbesondere aufgebonded sind.

9. Beleuchtungsvorrichtung nach einem der vorhergehenden Ansprüche,
**dadurch gekennzeichnet, dass** die Lichtquellen (24, 26) als LED-Chips (12) ausgebildet sind und auf dem Substrat (18) versenkt aufgebracht sind und dass die Reflexionsbereiche sich von den LED-Chips (12) betrachtet schräg nach vorne erstrecken.

10. Beleuchtungsvorrichtung nach einem der vorhergehenden Ansprüche,
**dadurch gekennzeichnet, dass** die LED-Chips (12) einzeln ansteuerbar sind.

11. Beleuchtungsvorrichtung nach einem der vorhergehenden Ansprüche,
**dadurch gekennzeichnet, dass** die Lichtquellen (26) für den Randbereich (20) ringförmig ausgebildet sind.

12. Beleuchtungsvorrichtung nach einem der vorhergehenden Ansprüche,
**dadurch gekennzeichnet, dass** verschiedene LED-Chips (12) für die Lichtquellen (24, 26) miteinander kombinierbar sind.

13. Beleuchtungsvorrichtung nach einem der vorhergehenden Ansprüche,
**dadurch gekennzeichnet, dass** die Lichtquellen (24, 26) Abmessungen im Millimeterbereich aufweisen, insbesondere als LED-Chips (12) mit etwa 1x1 Millimeter ausgebildet sind und für die Lichthärtung nahe an das Dentalrestaurationsmaterial herangeführt sind.

14. Beleuchtungsvorrichtung nach einem der vorhergehenden Ansprüche,
**dadurch gekennzeichnet, dass** die ersten Lichtquellen (24) Strahlengänge aufweisen, die sich mindestens teilweise überlappen, und dass die zweiten Lichtquellen (24) Strahlengänge aufweisen, die sich mindestens teilweise überlappen, und dass die zweiten Lichtquellen (26) Strahlengänge aufweisen, die sich mindestens teilweise überlappen.

15. Beleuchtungsvorrichtung nach einem der vorhergehenden Ansprüche,
**dadurch gekennzeichnet, dass** die ersten Lichtquellen (24) einerseits und die zweiten Lichtquellen (26) andererseits Strahlengänge aufweisen, die mindestens teilweise überlappungsfrei sind.

16. Beleuchtungsvorrichtung nach einem der vorhergehenden Ansprüche,
**dadurch gekennzeichnet, dass** die Steuervorrichtung für die Ansteuerung der ersten und der zweiten Lichtquellen (24, 26) einen Verschluss-Modus aufweist, mit welchem die Lichtquellen zeilenweise einschaltbar sind.

17. Beleuchtungsvorrichtung nach einem der vorhergehenden Ansprüche,
**dadurch gekennzeichnet, dass** mindestens die ersten Lichtquellen (24) einerseits und die zweiten Lichtquellen (26) andererseits je eine gemeinsame Rückleitung und voneinander getrennte Hinleitungen zur Spannungsversorgung aufweisen.

18. Beleuchtungsvorrichtung nach einem der vorhergehenden Ansprüche,
**dadurch gekennzeichnet, dass** die Lichtquellen (24, 26) als Leuchtdioden oder als Laserdioden ausgebildet sind.

19. Beleuchtungsvorrichtung nach einem der vorhergehenden Ansprüche,
**dadurch gekennzeichnet, dass** weiße und/oder verschiedenfarbige Leuchtdioden je getrennt einschaltbar sind, und Leuchtdioden mit gemeinsamen Identitätsmaxima gemeinsam einschaltbar sind.

20. Beleuchtungsvorrichtung nach einem der vorhergehenden Ansprüche,
**dadurch gekennzeichnet, dass** die Beleuchtungsvorrichtung (10) an der Spitze eines zahnärztlichen Instruments angebracht ist und für die Lichtpolymerisation eines lichtpolymerisierbaren Zahnersatzteils bestimmt ist.

21. Beleuchtungsvorrichtung nach einem der vorhergehenden Ansprüche,
**dadurch gekennzeichnet, dass** durch das Vorsehen der Steuervorrichtung, Gruppen von Lichtquellen nacheinander einschaltbar sind und insbesondere einander benachbarte Gruppen nacheinander einschaltbar sind.

## Claims

1. An illuminating device for dental purposes having a plurality of light sources based on semiconductors arranged on a substrate, said light sources being able to impinge on a dental restoration material that is polymerizable by irradiation, wherein at least one first light source (24) and at least one second light source (26) are selected and disposed on the substrate so that respective different areas of the dental restoration material may be irradiated by the first and second light source (24, 26) each, wherein a control device is provided by means of which the two light sources (24, 26) may be separately controlled for different areas of the dental restoration material,
**characterized in that** at least two light sources (24, 26) are set in an angle to one another so that they impinge on the dental restoration part that is to be hardened from two different angles.

2. The illuminating device according to claim 1,
**characterized in that** the first light source (24) for the impingement on the central area of the dental restoration material is disposed in a central region (22) of a base body (10), and the second light source (26) for the impingement on the edge region of the dental restoration material is disposed in an edge region (20) of the base body (10).

3. The illuminating device according to claim 2,
**characterized in that** the first light source (24) in the central region (22) of the base body has a higher output power than the second light source (26) arranged in the edge region (20).

4. The illuminating device according to claim 1,
**characterized in that** by means of the control device the first light sources (24) may be switched on for a first period of time, and the second light sources (26) may be switched on for a second period of time, and that the period of times do not overlap one another.

5. The illuminating device according to claim 1,
**characterized in that** by means of the control device the first light sources (24) may be switched on for a first period of time, and the second light sources (26) may be switched on for a second period of time, and that the period of times overlap one another.

6. The illuminating device according to any of the preceding claims,
**characterized in that** the control device for controlling the first and second light sources increases the output power supplied for a period of time in which the first light sources (24) irradiate a region and/or in which the second light sources (26) irradiate a different region.

7. The illuminating device according to any of the preceding claims,
**characterized in that** the light sources are arranged in a matrix, and that the outer light sources of the matrix impinge on a different region and the inner light sources of the matrix impinge on a region of the dental restoration part.

8. The illuminating device according to any of the preceding claims,
**characterized in that** LED-chips (12) are arranged next to one another and on top of each other within a grid and that wires for the LED-chips (12) as light sources (12) at least partially extend between the chips, and that the wires are in particular bonded thereon.

9. The illuminating device according to any of the preceding claims,
**characterized in that** the light sources (24, 26) are configured as LED-chips (12) and are arranged on the substrate (18) in a recessed manner, and that the reflection regions extend toward the front in an angle, as viewed from the LED-chips (12).

10. The illuminating device according to any of the preceding claims,
**characterized in that** the LED chips (12) may be controlled individually.

11. The illuminating device according to any of the preceding claims,
**characterized in that** the light sources (26) for the edge region (20) are configured in a ringshaped manner.

12. The illuminating device according to any of the preceding claims,
**characterized in that** different LED chips (12) for the light sources (24, 26) may be combined with one another.

13. The illuminating device according to any of the preceding claims,
**characterized in that** the light sources (24, 26) have dimension within the millimeter range, in particular are configured as LED-chips (12) having dimensions of 1x1 mm, and are closely lead to the dental restoration material for effecting the light hardening thereof.

14. The illuminating device according to any of the preceding claims,
**characterized in that** first light sources (24) comprise beam pathes that at least partially overlap one another, and that the second light sources (26) comprise beam pathes that at least partially overlap one another.

15. The illuminating device according to any of the preceding claims,
**characterized in that** the first light sources (24) on the one hand, and the second light sources (26) on the other hand comprise beam pathes that at least partially do not overlap.

16. The illuminating device according to any of the preceding claims,
**characterized in that** the control device for controlling the first and the second light sources (24, 26) comprises a shutter mode with the aid of which the light sources may be switched on line by line.

17. The illuminating device according to any of the preceding claims,
**characterized in that** at least the first light sources (24) on the one hand, and the second light sources (26) on the other hand each comprise one common back connector and separate forward connectors for the power supply.

18. The illuminating device according to any of the preceding claims,
**characterized in that** the light sources (24, 26) are configured as light diodes or laser diodes.

19. The illuminating device according to any of the preceding claims,
**characterized in that** white light diodes and/or light diodes of different colours may each be switched on individually, und light diodes having common intensity maxima may be switched on together.

20. The illuminating device according to any of the preceding claims,
**characterized in that** the illuminating device (10) is attached to the top of a dental instrument and is intended for the light polymerization of a light-polymerizable tooth replacement part.

21. The illuminating device according to any of the preceding claims,
**characterized in that** due to the provision of the control device, groups of light sources may be switched on one after the other, and in particular groups adjacent to one another may be switched on one after the other.

## Revendications

1. Dispositif d'éclairage pour travaux dentaires, comportant une pluralité de sources lumineuses à base de semi-conducteurs, qui sont montées sur un substrat, un matériau de restauration dentaire polymérisable par irradiation pouvant être sollicité par les sources lumineuses, au moins une première source lumineuse (24) et au moins une deuxième source lumineuse (26) étant choisies et étant disposées sur le substrat de telle sorte que chacune des différentes zones du matériau de restauration dentaire peut être irradiée par la première et la deuxième source lumineuse (24, 26), un dispositif de commande étant prévu pour commander séparément les deux sources lumineuses (24, 26) destinées à des zones différentes du matériau de restauration dentaire,
**caractérisé en ce qu'**au moins deux sources alumineuses (24, 26) sont disposées en angle l'une par rapport à l'autre, de telle sorte qu'elles sollicitent à partir de deux angles différents le matériau de restauration dentaire à durcir.

2. Dispositif d'éclairage selon la revendication 1, **caractérisé en ce que** la première source lumineuse (24) destinée à solliciter la zone centrale du matériau de restauration dentaire est disposée dans une zone centrale (22) d'un corps de base (10), et la deuxième source lumineuse (26) destinée à solliciter la zone marginale du matériau de restauration dentaire est disposée dans une zone marginale (20) du corps de base (10).

3. Dispositif d'éclairage selon la revendication 2, **caractérisé en ce que** la première source lumineuse (24) dans la zone centrale (22) du corps de base possède une puissance plus élevée que celle de la deuxième source lumineuse (26) agencée dans la zone marginale (20).

4. Dispositif d'éclairage selon la revendication 1, **caractérisé en ce que** le dispositif de commande permet de connecter les premières sources lumineuses (24) pendant un premier intervalle de temps et les deuxièmes sources lumineuses (26) pendant un deuxième intervalle de temps, et **en ce que** les intervalles de temps ne se chevauchent pas l'un l'autre.

5. Dispositif d'éclairage selon la revendication 1, **caractérisé en ce que** le dispositif de commande permet de connecter les premières sources lumineuses (24) pendant un premier intervalle de temps et les deuxièmes sources lumineuses (26) pendant un deuxième intervalle de temps, et **en ce que** les intervalles de temps se chevauchent l'un l'autre.

6. Dispositif d'éclairage selon l'une quelconque des revendications précédentes, **caractérisé en ce que** pour l'activation des premières et deuxièmes sources lumineuses, le dispositif de commande laisse augmenter la puissance acheminée pendant un intervalle de temps pendant lequel les premières sources lumineuses (24) éclairent une zone et/ou pendant lequel les deuxièmes sources lumineuses (26) éclairent une autre zone.

7. Dispositif d'éclairage selon l'une quelconque des revendications précédentes, **caractérisé en ce que** les sources lumineuses sont disposées dans une matrice et les sources lumineuses extérieures de la matrice sollicitent une autre zone et les sources lumineuses intérieures de la matrice sollicitent une zone du matériau de restauration dentaire.

8. Dispositif d'éclairage selon l'une quelconque des revendications précédentes, **caractérisé en ce que** des puces à LED (12) sont disposées les unes à côté des autres et les unes au-dessus des autres dans un réseau et des fils pour les puces à LED (12) formant les sources lumineuses (12) s'étendent au moins en partie entre les puces, et **en ce que** les fils sont en particulier reliés.

9. Dispositif d'éclairage selon l'une quelconque des revendications précédentes, **caractérisé en ce que** les sources lumineuses (24, 26) sont réalisées sous forme de puces à LED (12) et sont disposées sur le substrat (18) en étant enfoncées dans celui-ci, et **en ce que** les zones de réflexion s'étendent à partir des puces à LED (12) en oblique vers l'avant.

10. Dispositif d'éclairage selon l'une quelconque des revendications précédentes, **caractérisé en ce que** les puces à LED (12) peuvent être activées séparément.

11. Dispositif d'éclairage selon l'une quelconque des revendications précédentes', **caractérisé en ce que** les sources lumineuses (26) pour la zone marginale (20) sont disposées en forme d'anneau.

12. Dispositif d'éclairage selon l'une quelconque des revendications précédentes, **caractérisé en ce que** différentes puces à LED (12) pour les sources lumineuses (24, 26) peuvent être combinées entre elles.

13. Dispositif d'éclairage selon l'une quelconque des revendications précédentes, **caractérisé en ce que** les sources lumineuses (24, 26) ont des dimensions dans le domaine du millimètre, en particulier sont réalisées sous forme de puces à LED (12) avec environ 1x1 millimètre et sont amenées à proximité du matériau de restauration dentaire en vue du photodurcissement de celui-ci.

14. Dispositif d'éclairage selon l'une quelconque des revendications précédentes, **caractérisé en ce que** les premières sources lumineuses (24) comportent des trajectoires de rayons qui se chevauchent au moins partiellement, et **en ce que** les deuxièmes sources lumineuses (24) comportent des trajectoires de rayons qui se chevauchent au moins partiellement, et **en ce que** les deuxièmes sources lumineuses (26) comportent des trajectoires de rayons qui se chevauchent au moins partiellement.

15. Dispositif d'éclairage selon l'une quelconque des revendications précédentes, **caractérisé en ce que** les premières sources lumineuses (24), d'une part, et les deuxièmes sources lumineuses (26), d'autre part, comportent des trajectoires de rayons qui, au moins partiellement, ne se chevauchent pas.

16. Dispositif d'éclairage selon l'une quelconque des revendications précédentes, **caractérisé en ce que** pour la commande des premières et deuxièmes sources lumineuses (24, 26), le dispositif de commande comporte un mode de fermeture par lequel les sources lumineuses peuvent être connectées ligne par ligne.

17. Dispositif d'éclairage selon l'une quelconque des revendications précédentes, **caractérisé en ce qu'**au moins les premières sources lumineuses (24), d'une part, et les deuxièmes sources lumineuses (26), d'autre part, comportent respectivement une ligne de retour commune et des lignes d'acheminement séparées les unes des autres pour la fourniture de la tension.

18. Dispositif d'éclairage selon l'une quelconque des revendications précédentes, **caractérisé en ce que** les sources lumineuses (24, 26) sont réalisées sous forme de diodes électroluminescentes ou sous forme de diodes laser.

19. Dispositif d'éclairage selon l'une quelconque des revendications précédentes, **caractérisé en ce que** des diodes électroluminescentes blanches et/ou de couleurs différentes peuvent être connectées chacune séparément, et des diodes électroluminescentes avec des maxima d'identité communs peuvent être connectées conjointement.

20. Dispositif d'éclairage selon l'une quelconque des revendications précédentes, **caractérisé en ce que** ledit dispositif d'éclairage (10) est monté à l'extrémité d'un instrument dentaire et est destiné à effectuer la photopolymérisation d'un élément photopolymérisable d'une prothèse dentaire.

21. Dispositif d'éclairage selon l'une quelconque des revendications précédentes, **caractérisé en ce que** grâce à la présence du dispositif de commande, des groupes de sources lumineuses peuvent être connectés les uns après les autres et, en particulier, des groupes adjacents peuvent être connectés les uns après les autres.
